Europäisches Patentamt

European Patent Office

Office européen des brevets

(19)

(11) **EP 0 711 956 B1**

(12) **FASCICULE DE BREVET EUROPEEN**

(45) Date de publication et mention
de la délivrance du brevet:
**17.03.1999 Bulletin 1999/11**

(51) Int Cl.6: **F23N 5/16**, F23D 11/34,
F02C 9/26

(21) Numéro de dépôt: **95402497.2**

(22) Date de dépôt: **08.11.1995**

(54) **Dispositif de contrôle actif des instabilités de combustion et de décokéfaction d'un injecteur de carburant**

Aktive Regeleinrichtung der Verbrennungsinstabilität und der Entkohlung eines Brennstoffeinspritzventils

Device for actively controlling the combustion instabilities and the decoking of a fuel injector

(84) Etats contractants désignés:
**DE FR GB**

(30) Priorité: **09.11.1994 FR 9413434**

(43) Date de publication de la demande:
**15.05.1996 Bulletin 1996/20**

(73) Titulaire: **SOCIETE NATIONALE D'ETUDE ET DE CONSTRUCTION DE MOTEURS D'AVIATION, "S.N.E.C.M.A."
75015 Paris (FR)**

(72) Inventeurs:
• **Brocard, Jean-Marie
F-77950 Rubelles (FR)**

• **Desaulty, Michel A.A.
F-77240 Vert Saint Denis (FR)**
• **Perrin, Jean-Paul
F-77240 Vert Saint Denis (FR)**
• **Capelle, Jean-Yves
F-91310 Montlhery (FR)**
• **Varizat, Alain M.
F-91330 Yerres (FR)**

(56) Documents cités:
EP-A- 0 349 384       EP-A- 0 601 608
DE-A- 3 533 975       DE-A- 4 040 745
GB-A- 2 205 384       US-A- 4 605 167
US-A- 5 199 641

## Description

La présente invention concerne un dispositif de contrôle actif des instabilités de combustion et de décokéfaction des injecteurs de carburant. Elle s'applique notamment aux 5 moteurs d'avion pour d'une part, contrôler les instabilités de combustion dans les chambres de combustion et les chambres de post-combustion et réduire les émissions d'oxyde d'azote $NO_x$, et d'autre part, pour décokéfier in situ les injecteurs de carburant sans les démonter.

Les instabilités de combustion sont des oscillations de forte amplitude qui apparaissent dans tous types de chambres de combustion ou de post-combustion dans lesquelles se produisent de forts dégagements de chaleur. Ces instabilités correspondent en général à des modes de cavité qui sont excités par un couplage entre le champ de pression instationnaire et le dégagement d'énergie. Les oscillations sont particulièrement nocives car elles entraînent des vibrations susceptibles de détériorer certains organes, elles provoquent une augmentation du niveau sonore émis, et peuvent même entraîner une destruction progressive des injecteurs.

Les moyens classiques permettant d'amortir des vibrations à l'intérieur d'une chambre de combustion sont constitués de dispositifs passifs tels que des garnitures acoustiques ou des résonateurs de Helmholtz. Ces dispositifs sont généralement complexes, coûteux, et occupent un volume important, ce qui conduit à des difficultés de mise en place pratique. Par ailleurs, la plupart de ces dispositifs sont inefficaces pour supprimer des oscillations de basse fréquence en dessous de 500Hz. Il existe également des dispositifs de contrôle actif des instabilités de combustion dans lesquels le débit de carburant injecté dans la chambre de combustion est modulé en fonction des instabilités détectées. La modulation de débit peut être obtenue en utilisant un haut parleur tel que décrit dans la demande de brevet EP-A-349 384, ou une membrane vibrante. Ces dispositifs sont peu fiables et posent des problèmes de vieillissement et de tenue en température. La demande de brevet EP-A-601 608 décrit l'utilisation d'un piston entraîné par un élément électrostrictif ou magnétostrictif pour moduler le débit de carburant dans une plage de fréquences comprise entre 50 et 1000Hz. La modulation du débit peut également être effectuée pour les basses fréquences au moyen d'une servo-vanne tel que décrit dans la demande de brevet DE-A-4 040 745. Ces systèmes sont efficaces à basses fréquences mais ne fonctionnent pas au-delà de quelques centaines de Hertz. Par ailleurs, aucun de ces systèmes ne permet d'assurer en outre la décokéfaction des injecteurs de carburant qui nécessite un fonctionnement à des fréquences atteignant au moins une centaine de kilohertz.

Le but de l'invention est de pallier les inconvénients des dispositifs existant et de réaliser un dispositif de contrôle actif des instabilités de combustion qui soit efficace aussi bien à basses fréquences (quelques centaines de Hertz) qu'à hautes fréquences (quelques kilohertz).

Un autre but de l'invention est de réaliser un dispositif de contrôle actif des instabilités de combustion qui fonctionne en outre dans la gamme des fréquences ultrasonores jusqu'à une centaine de kilohertz, de manière à assurer la décokéfaction des injecteurs sans qu'il soit nécessaire de les démonter.

Pour réduire ou supprimer les instabilités de combustion, l'invention consiste à enregistrer le comportement instationnaire des flammes au moyen d'un détecteur tel qu'un capteur de pression ou une sonde optique, à analyser le signal détecté, et à moduler le débit de carburant de manière déphasée pour que le maximum de dégagement d'énergie se fasse durant les phases où la pression dynamique est minimale. La modulation du débit de carburant est commandée par un dispositif piézoélectrique connecté sur une ligne d'alimentation en carburant d'une chambre de combustion ou de post-combustion, en amont d'un orifice d'injection de carburant. Le dispositif piézoélectrique est alimenté par une tension électrique d'amplitude et de fréquence choisie de façon à engendrer, en sortie de l'injecteur de carburant, des fluctuations et des pulsations de débit de carburant permettant de réduire ou supprimer les instabilités de combustion. La tension électrique est déterminée à partir de la mesure des instabilités de pression et en tenant compte du point de fonctionnement du moteur et des conditions de vol.

Dans un premier mode de réalisation de l'invention, le dispositif piézoélectrique est disposé dans une chambre de volume V placée en amont d'un orifice d'injection.

Dans un deuxième mode de réalisation de l'invention, le dispositif piézoélectrique est disposé dans une restriction située en amont d'un orifice d'injection ou au niveau de l'orifice d'injection.

Selon l'invention le dispositif de contrôle actif des instabilités de combustion dans une chambre de combustion ou de post-combustion et de décokéfaction d'un injecteur de carburant, comportant :

- au moins un détecteur (50) pour mesurer des fluctuations de pression dans la chambre de combustion (51), respectivement de post-combustion,
- des moyens (52) de traitement du signal mesuré par le détecteur (50) et d'élaboration d'un signal de commande,
- au moins un dispositif piézoélectrique (53) disposé sur une ligne hydraulique d'alimentation en carburant de la chambre de combustion (51) respectivement de post combustion pour engendrer sous l'effet du signal de commande, des pulsations de débit de carburant en sortie d'un injecteur de carburant, est caractérisé en ce que dans une phase de décokéfaction d'un injecteur de carburant, le signal de commande comporte des impulsions de tension à haute fréquence dans le domaine des ondes ultrasonores.

D'autres particularités et avantages de l'invention apparaîtront clairement dans la suite de la description donnée à titre d'exemple non limitatif et faite en regard des figures annexées qui représentent :

- les figures 1 et 2, deux exemples de réalisation d'un dispositif de pulsations de débit de carburant dans lesquels un dispositif piézoélectrique est inséré dans une chambre de volume V en amont d'un orifice d'injection, selon l'invention.

- les figures 3a et 3b, un exemple de réponse des systèmes de pulsation de débit correspondant aux figures 1 et 2, en fonction de la fréquence, pour deux débits de fluide différents.

- la figure 4, un exemple de réalisation d'un dispositif de pulsations de débit de carburant dans lequel un dispositif piézoélectrique est placé dans une restriction en amont d'un orifice d'injection, selon l'invention.

- la figure 5, un exemple de réalisation d'un dispositif de pulsations de débit de carburant dans lequel un dispositif piézoélectrique est disposé dans un orifice d'injection, selon l'invention.

- la figure 6, un schéma synoptique d'un dispositif de contrôle actif des instabilités de combustion dans une chambre de combustion ou de post-combustion, selon l'invention.

L'alimentation en carburant d'une chambre de combustion ou de post-combustion est effectuée par un circuit hydraulique connecté à des injecteurs de carburant.

Le débit Q de carburant en sortie d'un injecteur est régit par la loi de Bernouilli :

$$Q = KS \sqrt{\Delta P}$$

KS étant le coefficient de débit de l'injecteur et P étant la différence entre les pressions en amont P1 et en aval P2 de l'injecteur.

Les pulsations de débit de carburant peuvent donc être réalisées de deux manières différentes, soit par des variations de la pression et du débit de carburant, soit par des variations du coefficient de débit de l'injecteur.

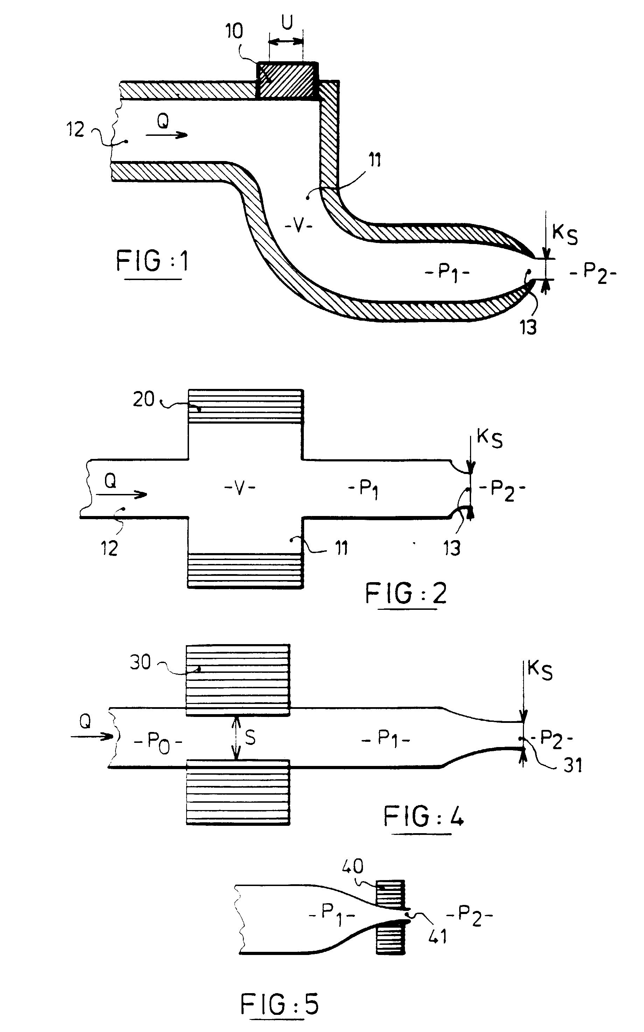

Des exemples de réalisation d'un dispositif de pulsations de débit de carburant engendrant des variations de la pression et du débit de carburant sont représentés sur les figures 1, 2 et 4.

Sur les figures 1 et 2, les variations de la pression et du débit de carburant sont obtenues par des variations du volume d'une chambre de volume V. Pour cela, un dispositif piézoélectrique 10, 20 est inséré dans une chambre de volume V disposée sur la ligne hydraulique en amont d'un orifice d'injection dont le coefficient de débit est KS. Sur la figure 1, la chambre 11 de volume V est une cavité interne à l'injecteur de carburant disposée entre une entrée 12 de carburant et un orifice 13 d'injection de carburant. Sur la figure 2, la chambre de volume V est une cavité interne d'une bobine piézoélectrique 20 insérée dans la ligne hydraulique en amont de l'injecteur de carburant.

Lorsque le dispositif piézoélectrique est alimenté par une tension électrique U, il se déforme et provoque des variations du volume de la chambre. A basse fréquence, c'est à dire pour les fréquences inférieures à la fréquence de résonance du fluide dans la canalisation, les variations du volume V de la chambre 11 provoquent des variations de volume du carburant et créent ainsi des variations de débit de carburant.

A haute fréquence, c'est à dire pour les fréquences supérieures à la fréquence de résonance du fluide dans la canalisation, les variations du volume V de la chambre 11 provoquent une onde de pression dont la fréquence et l'amplitude dépendent respectivement de la fréquence et de la valeur efficace de la tension d'alimentation du dispositif piézoélectrique. Les variations de pression créent ainsi des variations de débit de carburant.

A fréquence moyenne, les deux aspects sont présents. Ce système est d'autant plus efficace que la fréquence de pulsations de débit de carburant nécessaire pour réduire les instabilités de combustion est forte.

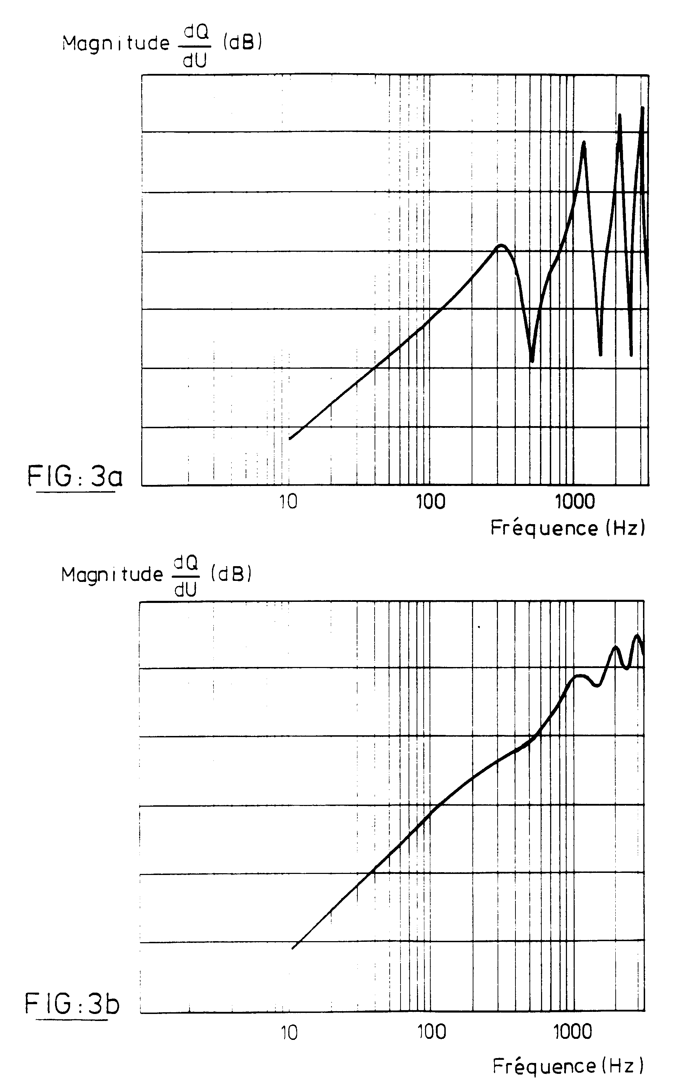

Un exemple de réponse de ce système en fonction de la fréquence est représenté sur les figures 3a et 3b pour deux débits de fluide différents, ces débits de fluide étant respectivement minimal et maximal. Ces deux courbes représentant la magnitude d Q/dU (Q et U étant respectivement le débit de fluide et la tension électrique appliquée) en fonction de la fréquence montrent que les pulsations de débit sont proportionnelles à la fréquence lorsque l'amplitude de la tension appliquée est constante.

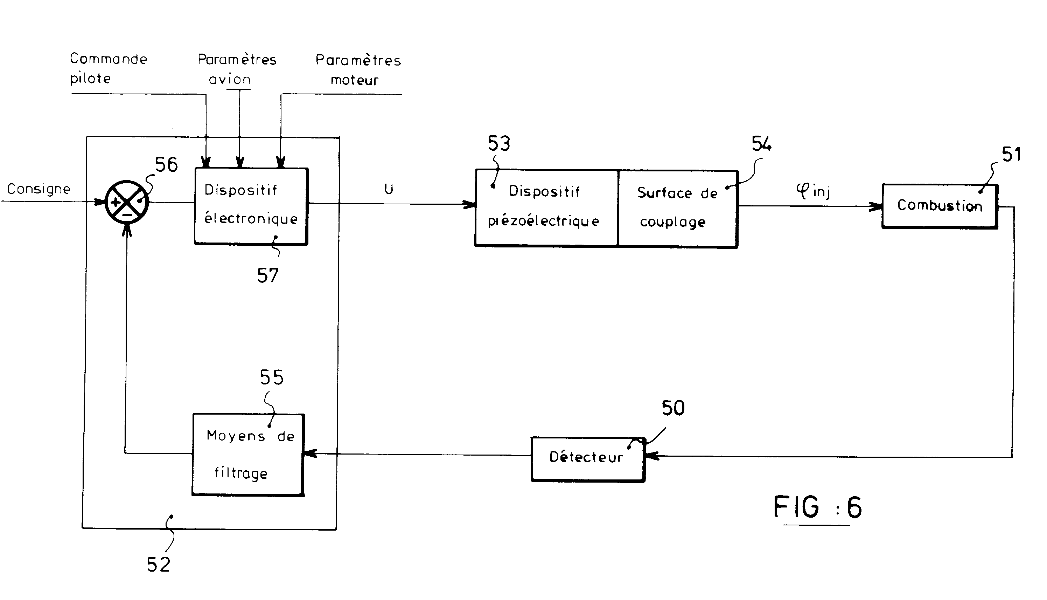

Sur la figure 4, les variations de la pression et du débit de carburant sont obtenues par des variations d'un coefficient de débit intermédiaire. Pour cela, une bobine piézoélectrique 30 de section S inférieure à la section de la ligne hydraulique et formant une restriction est connectée sur la ligne hydraulique en amont d'un orifice d'injection 31. Lorsque la bobine piézoélectrique 30 est alimentée par une tension électrique, elle se déforme et provoque des variations dS de la section S de la bobine, ces variations dS agissent sur la pression P1 en aval de la bobine en la modulant d'une valeur dP1 et créent ainsi des fluctuations de débit de carburant.

De préférence la bobine piézoélectrique 30 est réalisée en utilisant un film de polyfluorure de vinylidène PVDF enroulé en multicouches pour former une bobine. Il y a alors multiplication de l'effet de restriction grâce à la multitude de couches du film piézoélectrique.

La figure 5 représente un exemple de réalisation de pulsations de débit de carburant par des variations du coefficient de débit de l'injecteur.

Sur cette figure, une bobine piézoélectrique 40 est disposée au niveau de l'orifice d'injection 41 d'un injecteur de carburant. Sous l'action d'une tension électrique d'alimentation, la bobine se déforme, fait varier la section de passage de l'injecteur et son coefficient de débit KS.

Ce dispositif présente cependant une difficulté de réalisation technologique due notamment à la température des injecteurs. Les dispositifs représentés sur les figures 1, 2, 4 ne présentent pas cette difficulté car le corps piézoélectrique peut être disposé en zone froide.

La figure 6 représente un schéma synoptique d'un dispositif de contrôle actif des instabilités de combustion dans une chambre de combustion ou de post-combustion, selon l'invention.

Le dispositif représenté à la figure 6 comporte un détecteur 50 des instabilités de pression dans la chambre de combustion ou de post-combustion 51, des moyens de traitement 52 du signal mesuré par le détecteur 50 et d'élaboration en retour d'une tension électrique U de commande d'un dispositif piézoélectrique 53 connecté sur une ligne hydraulique d'alimentation en carburant de la chambre de combustion ou de post-combustion. En réponse à la tension électrique de commande, le dispositif piézoélectrique se déforme, agit directement sur le carburant par l'intermédiaire de variations de débit ou de pression, et engendre ainsi des pulsations de débit de carburant en sortie des injecteurs ; l'amplitude et la fréquence des pulsations sont respectivement fonction de l'amplitude et de la fréquence de la tension électrique de commande.

Dans une phase de contrôle actif des instabilités de combustion, ce qui correspond à une utilisation normale du dispositif piézoélectrique, les pulsations de débit de carburant en sortie des injecteurs se situent entre 1% et 10% du débit de carburant maximum, et la fréquence de pulsation du débit de carburant se situe entre 200 Hz et 3000 Hz. Pour ce domaine de fréquences, il est nécessaire d'effectuer une adaptation d'impédance mécanique entre le dispositif piézoélectrique 53 et la ligne hydraulique d'alimentation en carburant.

Cette adaptation d'impédance s'effectue par l'optimisation de la dimension de la surface de contact entre le dispositif piézoélectrique et la ligne hydraulique.

Cette surface de contact peut être la surface du dispositif piézoélectrique lui-même, où une surface de couplage hydromécanique 54 disposée entre le dispositif piézoélectrique et la ligne hydraulique. Dans ce dernier cas, la dimension du dispositif piézoélectrique est quelconque, ce qui permet l'utilisation d'un dispositif piézoélectrique standard, tandis que la surface de couplage 54 a une dimension ajustée pour optimiser l'adaptation d'impédance. La surface de couplage 54 est réalisée dans un matériau ayant une raideur suffisante, par exemple en métal, de manière à transmettre directement les déformations du dispositif piézoélectrique sous forme d'une variation de pression appliquée sur la ligne hydraulique. La variation de pression entraîne alors une variation du débit de carburant.

Le détecteur 50 des instabilités de pression peut être par exemple un capteur piézoélectrique ou un capteur optique. Les moyens de traitement 52 du signal mesuré par le détecteur 50 des instabilités de pression comprennent des moyens de filtrage 55 de la composante statique du signal mesuré pour délivrer un signal correspondant aux fluctuations de pression dans la chambre de combustion ou de post-combustion 51, des moyens de comparaison 56 des fluctuations de pression obtenues en sortie des moyens de filtrage 55 à une valeur de consigne, un dispositif électronique 57 pour élaborer en fonction du résultat de la comparaison, une tension électrique de commande du dispositif piézoélectrique de manière à diminuer les fluctuations de pression dans la chambre de combustion ou de post combustion.

Le dispositif électronique 57 permet d'une part de faire varier la fréquence de la tension appliquée au dispositif piézoélectrique 53 de façon à moduler les variations du débit Q de carburant, d'autre part de faire varier l'amplitude U de la tension appliquée au dispositif piézoélectrique de façon à optimiser la puissance maximale nécessaire pour obtenir des variations de débit de carburant de valeur maximale dQ max prédéterminée. La valeur maximale dQ max est déterminée en fonction des paramètres de l'avion et du moteur notamment du point de fonctionnement du moteur et des conditions de vol. Par exemple la valeur maximale dQ max peut être choisie égale à 2 % du débit de carburant maximum dans certaines conditions et à 4% dans d'autres conditions.

Le dispositif de contrôle actif des instabilités de combustion utilisant un dispositif piézoélectrique selon l'invention, présente l'avantage de pouvoir être utilisé également pour la décokéfaction des injecteurs. Dans cette phase de décokéfaction, le dispositif électronique élabore des impulsions de tension de forte amplitude et à haute fréquence dans le domaine des ondes ultrasonores, par exemple de l'ordre de quelques kilohertz.

Dans ce cas, le nettoyage des injecteurs est effectué "in situ" sans démontage des injecteurs, ce qui permet d'améliorer la maintenance.

L'application des impulsions à haute fréquence peut être commandée automatiquement par le dispositif électronique. Lors de cette opération, les valeurs de la tension et de la fréquence sont ajustées afin d'être dans des conditions de nettoyage des injecteurs.

L'application des impulsions à haute fréquence peut également être commandée directement à partir du poste de pilotage par des équipes de maintenance au sol.

**Revendications**

1. Dispositif de contrôle actif des instabilités de combustion dans une chambre de combustion ou de post-combustion et de décokéfaction d'un injecteur de carburant, comportant :

   - au moins un détecteur (50) pour mesurer des fluctuations de pression dans la chambre de combustion (51), respectivement de post-combustion,
   - des moyens (52) de traitement du signal mesuré par le détecteur (50) et d'élaboration d'un signal de commande,
   - au moins un dispositif piézoélectrique (53) disposé sur une ligne hydraulique d'alimentation en carburant de la chambre de combustion (51) respectivement de post combustion pour engendrer sous l'effet du signal de commande, des pulsations de débit de carburant en sortie d'un injecteur de carburant, caractérisé en ce que dans une phase de décokéfaction d'un injecteur de carburant, le signal de commande comporte des impulsions de tension à haute fréquence dans le domaine des ondes ultrasonores.

2. Dispositif selon la revendication 1, caractérisé en ce que dans une phase de contrôle actif des instabilités de combustion, le signal de commande est déterminé en fonction du signal détecté par le détecteur (50).

3. Dispositif selon la revendication 1, caractérisé en ce que le dispositif piézoélectrique (53) est disposé dans une chambre de volume V placée en amont d'un orifice d'injection.

4. Dispositif selon la revendication 3, caractérisé en ce que le dispositif piezoélectrique est une bobine piézoélectrique (20) comportant une cavité interne formant la chambre de volume V.

5. Dispositif selon la revendication 1, caractérisé en ce que le dispositif piézoélectrique (53) est disposé dans une restriction située en amont d'un orifice d'injection.

6. Dispositif selon la revendication 5, caractérisé en ce que la restriction est située au niveau de l'orifice d'injection.

7. Dispositif selon les revendications 5 ou 6 caractérisé en ce que le dispositif piézoélectrique est une bobine piézoélectrique (30) de section inférieure à la section de la ligne hydraulique, la section de la bobine formant la restriction.

8. Dispositif selon l'une quelconque des revendications 1 à 8, caractérisé en ce qu'il comporte en outre des moyens (54) de couplage hydromécanique disposés entre le dispositif piézoélectrique (53) et la ligne hydraulique d'alimentation en carburant.

9. Dispositif selon la revendication 8, caractérisé en ce que les moyens (54) de couplage hydromécanique sont constitués par une surface de dimensions prédéterminées de façon à réaliser une adaptation d'impédance entre le dispositif piézoélectrique et la ligne hydraulique.

10. Dispositif selon la revendication 1, caractérisé en ce que les moyens (52) de traitement du signal mesuré par le détecteur (50) et d'élaboration du signal de commande comportent des moyens de filtrage (55) de la composante statique du signal mesuré pour délivrer un signal correspondant aux fluctuations de pression, des moyens de comparaison (56) des fluctuations de pression à une valeur de consigne et un dispositif électronique (57) pour délivrer la tension électrique de commande du dispositif piézoélectrique.

11. Dispositif selon la revendication 10, caractérisé en ce que dans la phase de décokéfaction d'un injecteur de carburant, les impulsions de tension à haute fréquence sont déclenchées automatiquement par le dispositif électronique (57).

12. Dispositif selon la revendication 10, caractérisé en ce que dans la phase de décokéfaction d'un injecteur de carburant, les impulsions de tension à haute fréquence sont déclenchées manuellement pendant une opération de maintenance

**Patentansprüche**

1. Vorrichtung zur aktiven Regelung der Verbrennungsinstabilitäten in einer Brennkammer oder einer Nachverbrennungskammer und zur Entkokung einer Kraftstoffeinspritzdüse

   mit wenigstens einem Detektor (50) zur Messung der Druckschwankungen in der Brennkammer (51) bzw. in der Nachverbrennungskammer,
   mit Mitteln (52) zur Verarbeitung des von dem Detektor (50) gemessenen Signals und zur Gewinnung eines Steuersignals,
   mit wenigstens einer in einer hydraulischen Kraftstoffspeiseleitung der Brennkammer (51) bzw. der Nachverbrennungskammer angeordneten piezoelektrischen Vorrichtung (53) für die Erzeugung von pulsierenden Schwankungen des Kraftstoffdurchsatzes am Ausgang einer Kraftstoffeinspritzdüse unter der Wirkung des Steuersignals.

**dadurch gekennzeichnet,**

daß das Steuersignal in einer Entkokungsphase einer Kraftstoffeinspritzdüse im Ultraschallbereich liegende hochfrequente Spannungsimpulse aufweist.

2. Vorrichtung nach Anspruch 1, dadurch gekennzeichnet, daß das Steuersignal in einer Phase der aktiven Regelung der Verbrennungsinstabilitäten in Abhängigkeit von dem von dem Detektor (50) detektierten Signal bestimmt wird.

3. Vorrichtung nach Anspruch 1, dadurch gekennzeichnet, daß die piezoelektrische Vorrichtung (53) in einer Kammer mit dem Volumen V angeordnet ist, die sich stromaufwärts einer Einspritzöffnung befindet.

4. Vorrichtung nach Anspruch 3, dadurch gekennzeichnet, daß die piezoelektrische Vorrichtung eine piezoelektrische Spule (20) ist, die einen inneren Hohlraum besitzt, der die Kammer mit dem Volumen V bildet.

5. Vorrichtung nach Anspruch 1, dadurch gekennzeichnet, daß die piezoelektrische Vorrichtung (53) in der stromaufwärts einer Einspritzöffnung gelegenen Verengung angeordnet ist.

6. Vorrichtung nach Anspruch 5, dadurch gekennzeichnet, daß die Verengung in Höhe der Einspritzöffnung liegt.

7. Vorrichtung nach Anspruch 5 oder 6, dadurch gekennzeichnet, daß die piezoelektrische Vorrichtung eine piezoelektrische Spule (30) ist, deren Querschnitt kleiner ist als der Querschnitt der hydraulischen Leitung, und daß der Querschnitt der Spule die Verengung bildet.

8. Vorrichtung nach einem der Ansprüche 1 bis 7, dadurch gekennzeichnet, daß zwischen der piezoelektrischen Vorrichtung (53) und der hydraulischen Kraftstoffspeiseleitung hydromechanische Kopplungsmittel (54) angeordnet ist.

9. Vorrichtung nach Anspruch 8, dadurch gekennzeichnet, daß die hydromechanischen Kopplungsmittel (54) aus einer Fläche bestehen, deren Abmessungen so festgelegt sind, daß eine Impedanzanpassung zwischen der piezoelektrischen Vorrichtung und der hydraulischen Leitung hergestellt wird.

10. Vorrichtung nach Anspruch 1, dadurch gekennzeichnet, daß die Mittel (52) zur Verarbeitung des von dem Detektor (50) gemessenen Signals und zur Gewinnung des Steuersignals Filtermittel (55) aufweisen zum Ausfiltern der statischen Komponente des gemessenen Signals, um ein den Druckschwankungen entsprechendes Signal zu gewinnen, ferner Vergleichermittel (56) zum Vergleichen der Druckschwankungen mit einem Schwellwert sowie eine elektronische Vorrichtung (57) zur Lieferung der elektrischen Steuerspannung für die piezoelektrische Vorrichtung.

11. Vorrichtung nach Anspruch 10, dadurch gekennzeichnet, daß die hochfrequenten Spannungsimpulse in der Entkokungsphase einer Kraftstoffeinspritzdüse von der elektronischen Vorrichtung (57) automatisch ausgelöst werden.

12. Vorrichtung nach Anspruch 10, dadurch gekennzeichnet, daß die hochfrequenten Spannungsimpulse in der Entkokungsphase einer Kraftstoffeinspritzdüse während einer Wartungsoperation manuell ausgelöst werden.

## Claims

1. Device for actively controlling the combustion instabilities in a combustion or post-combustion chamber and for decoking a fuel injector, comprising:

   - at least one detector (50) for measuring pressure fluctuations in the combustion (51) or post-combustion, chamber,
   - means (52) of processing the signal measured by the detector (50) and of producing a command signal,
   - at least one piezoelectric device (53) placed in a hydraulic line supplying fuel to the combustion (51), or post-combustion, chamber, for generating, under the effect of the command signal, pulsations in the fuel delivery leaving a fuel injector,

   characterized in that in a fuel-injector decoking phase, the command signal contains high-frequency voltage pulses in the ultrasound waveband.

2. Device according to Claim 1, characterized in that in a combustion-instabilities active control phase, the command signal is determined as a function of the signal detected by the detector (50).

3. Device according to Claim 1, characterized in that the piezoelectric device (53) is placed in a chamber of volume V placed upstream of an injection orifice.

4. Device according to Claim 3, characterized in that the piezoelectric device is a piezoelectric coil (20) comprising an internal cavity forming the chamber of volume V.

5. Device according to Claim 1, characterized in that the piezoelectric device (53) is placed in a restriction located upstream of an injection orifice.

6. Device according to Claim 5, characterized in that the restriction is located in the region of the injection orifice.

7. Device according to Claims 5 or 6, characterized in that the piezoelectric device is a piezoelectric coil (30) of smaller cross section than the hydraulic line, the cross section of the coil forming the restriction.

8. Device according to any one of Claims 1 to 8, characterized in that it further comprises hydromechanical-coupling means (54) placed between the piezoelectric device (53) and the hydraulic fuel-supply line.

9. Device according to Claim 8, characterized in that the hydromechanical-coupling means (54) consist of a surface whose dimensions are predetermined in such a way as to perform impedance matching between the piezoelectric device and the hydraulic line.

10. Device according to Claim 1, characterized in that the means (52) of processing the signal measured by the detector (50) and of producing the command signal comprise means (55) of filtering out the static component of the measured signal so as to deliver a signal that corresponds to the pressure fluctuations, means (56) of comparing the pressure fluctuations with a reference value, and an electronic device (57) for delivering the electric voltage for commanding the piezoelectric device.

11. Device according to Claim 10, characterized in that, in the fuel-injector decoking phase, the high-frequency voltage pulses are triggered automatically by the electronic device (57).

12. Device according to Claim 10, characterized in that, in the fuel-injector decoking phase, the high-frequency voltage pulses are triggered manually during a maintenance operation.

FIG : 1

FIG : 2

FIG : 4

FIG : 5

FIG:3a

Magnitude $\frac{dQ}{dU}$ (dB)

Fréquence (Hz)

FIG:3b

Magnitude $\frac{dQ}{dU}$ (dB)

Fréquence (Hz)

EP 0 711 956 B1

Commande pilote

Paramètres avion

Paramètres moteur

Consigne

56

Dispositif électronique

57

U

53

Dispositif piézoélectrique

54

Surface de couplage

$\varphi_{inj}$

51

Combustion

55

Moyens de filtrage

50

Détecteur

52

FIG : 6